# EUROPÄISCHE PATENTANMELDUNG

(11) **EP 1 614 940 A2**
(43) Veröffentlichungstag der Anmeldung: **11.01.2006**
(21) Anmeldenummer: 05014407.0
(22) Anmeldetag: 02.07.2005
(51) Int. Cl.: F16H 63/20, F16H 61/28

(54) **Getriebeeinrichtung für ein Kraftfahrzeug**

(30) Priorität: 08.07.2004 DE 102004032989
(71) Anmelder: LuK Lamellen und Kupplungsbau Beteiligungs KG, 77815 Bühl (DE)
(72) Erfinder: Ehrlich, Matthias, 77815 Bühl (DE); Esly, Norbert, 77815 Bühl (DE)

(57) **Zusammenfassung**

Eine Getriebeeinrichtung für ein Kraftfahrzeug, die eine Mehrzahl von Übersetzungsstufen bildenden Radsätzen aufweist, wobei Endausgangsmechanismen vorgesehen sind und wobei zum Betätigen der Endausgangsmechanismen eine Betätigungseinrichtung vorgesehen ist, die zum Einwirken auf Endausgangsmechanismen für das Einlegen von Übersetzungsstufen mehrere antreibbare Hauptbetätigungselemente, insbesondere Schaltfinger, aufweist, wobei auf zumindest einen Endausgangsmechanismus wahlweise mittels eines ersten oder eines zweiten Hauptbetätigungselements eingewirkt werden kann, wobei dabei bei identischer Antriebsrichtung, insbesondere bei identischem Drehsinn, dieser beiden Hauptbetätigungselemente der Endausgangsmechanismus in Abhängigkeit des auf diesen Endausgangsmechanismus wirkenden Hauptbetätigungselements in einer von zwei verschiedenen, insbesondere entgegengesetzten, Richtungen bewegt wird; sowie eine Betätigungseinrichtung und ein Verfahren zum elektronisch gesteuerten Ermitteln von Referenzpositionen einer Betätigungseinrichtung.

## Beschreibung

Die Erfindung betrifft eine Getriebeeinrichtung für ein Kraftfahrzeug, eine Betätigungseinrichtung für eine derartige Getriebeeinrichtung sowie ein Verfahren zum elektronisch gesteuerten Ermitteln von Referenzpositionen einer Betätigungseinrichtung einer Getriebeeinrichtung für ein Kraftfahrzeug.

Bei Gangwechselvorgängen in klassisch gestalteten gestuften Kraftfahrzeug-Getriebeeinrichtungen laufen - ausgehend von dem alten Gang - die folgenden drei Schritte in zeitlicher Abfolge ab: "Auslegen des alten Ganges" - "Wählen" - "Einlegen des Zielganges". Darüber hinaus sind Kraftfahrzeuggetriebegestaltungen bekannt geworden, bei denen das Wählen bzw. Wählbewegungen vor dem Auslegen des alten Ganges stattfinden kann. Bei solchen Gestaltungen ist beispielsweise vorgesehen, das ein Hauptbetätigungselement bzw. Schaltfinger im Wesentlichen nur für das Einlegen von Gängen zuständig ist und zusätzliche Geometrien die Funktion des Auslegens von Gängen übernehmen. Dabei werden insbesondere sogenannte Nebenbetätigungselemente für die Auslegefunktion verwendet. Es kann beispielsweise vorgesehen sein, dass sich die zusätzlichen Geometrien einerseits an einer zentralen Schaltwelle befinden und andererseits an Schaltmäulern, die an Endausgangsmechanismen bzw. Schaltgabeln oder Schaltschienen vorgesehen sind.

Die Auslegegeometrien wirken in aller Regel in Gassen, in denen der Schaltfinger nicht aktiv ist. Dabei kann vorgesehen sein, dass eine feste Zuordnung zwischen Schaltfinger und Auslegegeometrie, dabei gleichzeitig eine aktive Gangsperre darstellt. Konstruktive Umsetzungen dieses Ansatzes werden daher auch als "Active Interlock" bezeichnet.

Bei einem solchen "Active Interlock" ist in aller Regel vorgesehen, dass das Hauptbetätigungselement bzw. der Schaltfinger auch bei eingelegtem Gang in eine Mittel- bzw. Neutralposition zurück bewegt werden kann, ohne den Gang auszulegen. Die Wählbewegung wird dabei möglich, bevor der Gang ausgelegt ist.

Ein derartiges System, insbesondere ein Active Interlock, ist durch die DE 102 06 561 A1 bekannt geworden. Dort wird ferner vorgeschlagen, ein derartiges System für Parallelschaltgetriebe einzusetzen. Beim Parallelschaltgetriebe (PSG) sind verschiedene Teilgetriebe in verschiedenen Antriebsstrangzweigen angeordnet. Während es die Funktionsfähigkeit eines Getriebes mit nur einem Antriebsstrangzweig in der Regel erfordert, dass nur ein Gang gleichzeitig im Getriebe eingelegt sein kann, kann bei einem Parallelschaltgetriebe in jedem der Antriebsstrangzweige zeitgleich ein Gang eingelegt sein.

Die DE 102 06 561 A1 schlägt vor, eine gemeinsame zentrale Schaltwelle für beide Teilgetriebe vorzusehen. Für das Wählen ist diese zentrale Schaltwelle mittels eines Elektromotors axial verlagerbar, und für das Ein- und Auslegen von Gängen ist diese zentrale Schaltwelle drehbar ausgeführt. Zum Erzeugen der entsprechenden Dreh- und Axialbewegung ist jeweils genau ein Elektromotor vorgesehen. An der Schaltwelle sind mehrere Nebenbetätigungselemente für das Auslegen von Gängen sowie - zunächst - ein Hauptbetätigungselement, insbesondere Schaltfinger, für das Einlegen der Gänge vorgesehen.

Prinzipiell könnten mittels dieses einen Schaltfingers Gänge in beiden Teilgetrieben eingelegt werden. Um allerdings die axialen Verfahrwege dieser Schaltwelle zu reduzieren, wird in der DE 102 06 561 A1 vorgeschlagen, für jedes der Teilgetriebe einen separaten Schaltfinger sowie separate Nebenbetätigungselemente vorzusehen, so dass dort insgesamt zwei Hauptbetätigungselemente bzw. Schaltfinger und eine (entsprechend erhöhte) Anzahl von Nebenbetätigungselementen gegeben sind. Ferner schlägt die DE 102 06 561 A1 vor, die Gangwechselvorgänge bzw. die Betätigungseinrichtung mittels einer (elektronischen) Steuereinrichtung zu steuern.

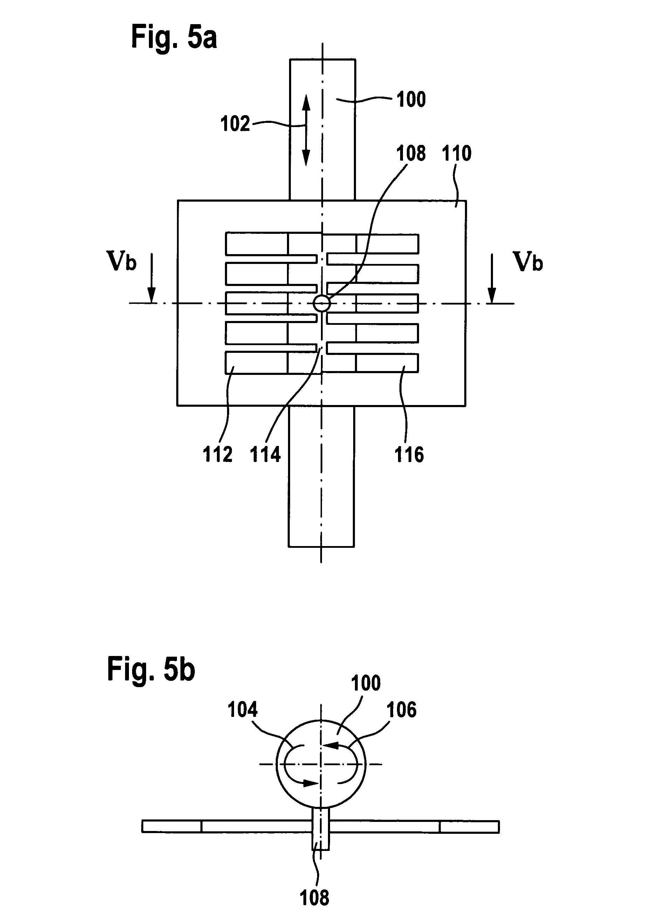

Der Anmelderin ist - zumindest intern - bekannt, dass bei derartigen Systemen bzw. bei einer bekannten Ausführung von Active Interlock in Verbindung mit einer Dreh- bzw. zentralen Schaltwellenbetätigung die Gänge ausgehend von einer Neutralstellung mit einem Drehwinkel von ca. +/- 60° mit der Drehwelle geschaltet werden. Es kann bei einer solchen Gestaltung mit elektronischer Steuerung notwendig sein, dass eine Referenzierungsprozedur durchgeführt wird. Dies kann beispielsweise so sein, dass das elektronische Steuergerät bzw. die Software dafür sämtliche Schaltgassen und die Neutralgasse des Getriebes in einer solchen Referenzierungsprozedur ermittelt. Dies erfolgt insbesondere bei stillstehendem Fahrzeug, was den Schaltzustand "neutral" voraussetzt. Basierend auf den dadurch ermittelten Referenzen wird der Getriebeaktor bzw. die Betätigungseinrichtung blind innerhalb der Getriebeschaltung manövriert, um Schaltungen vorzunehmen. Während des Betriebs können sich Situationen ergeben, bei denen alle Referenzen plötzlich verloren gehen. Der Anmelderin ist weiter - zumindest intern - bekannt, dass in diesem Falle wiederum eine Referenzierungsprozedur ausgeführt wird. Maßgebend hierfür ist in aller Regel, dass von der Hardware bestimmte Merkmale für die Software bereit gestellt werden. Solche Merkmale sind z. B. die unterschiedliche Höhe der Schaltgassen für beide Schaltrichtungen "+/-", was im folgenden von in Bezug auf die Fig. 5a und 5b beispielhaft erläutert wird. Dadurch kann erkannt werden, in welcher Richtung bzw. in welcher Orientierung der Schaltrichtung sich die Neutralgasse befindet. Der Unterschied in der Höhendifferenz beträgt bei der Anmelderin bekannten Systemen mindestens 1 mm über alle Toleranzen, damit ein Unterschied für die Software überhaupt erkennbar wird. Der Anmelderin ist weiterhin bekannt, dass dabei diese Referenzen innerhalb des Getriebeaktors über das bzw. ein Gate (mechanisches Abbild des Schaltschemas) realisiert werden können.

Fig. 5a zeigt beispielhaft eine derartige, der Anmelderin zumindest intern bekannte Ausführung eines Gates, wobei Fig. 5b eine Schnittansicht entlang der Linie Vb-Vb aus Fig. 5a zeigt. Die zentrale Schaltwelle 100, die auch als Dreh- bzw. Betätigungswelle bezeichnet werden kann und die Bestandteil eines Aktors bzw. einer Betätigungseinrichtung ist, kann - eine Bewegung in axialer Richtung, die eine Wählbewegung ist, ausführen, was durch den Doppelpfeil 102 schematisch angedeutet ist. Ferner kann sie - wie durch die Pfeile 104, 106 schematisch angedeutet - eine Bewegung in Dreh- bzw. Schwenkrichtung ausführen, die eine Schaltbewegung ist. Mit der zentralen Schaltwelle 100 ist ein Stift 108 fest verbunden. Die Platte 110 stellt das eigentliche Gate dar. Diese Platte 110 ist dem Gehäuse bzw. Getriebegehäuse fest verbunden und bewegt sich nicht. Innerhalb dieser Platte 110 sind Ausschnitte 112, 114, 116 vorgesehen, die eine Begrenzung vorgeben, innerhalb welcher der Stift 108 bewegt werden kann. Dabei ist vorgesehen, dass der Ausschnitt 112 höher ist als der Ausschnitt 116. Wenn der Stift 108 beispielsweise bei einem Referenz-"Black Out" der Software innerhalb des Ausschnitts 112 positioniert ist, würde die Referenzierungsprozedur bei dieser Gestaltung zunächst eine Bewegung der Drehwelle 100 in Wählrichtung, also in Richtung des Doppelpfeils 102 einleiten, bis jeweils beide begrenzenden Anschläge gefunden werden. Durch diesen Vorgang wird die Höhe des Ausschnitts ermittelt und anschließend mit den in der Software gespeicherten Werten für die Ausschnittshöhe (groß/klein) verglichen. Anhand dieser Information kann die Softwaresteuerung entscheiden, dass die Drehwelle in einer bestimmen Richtung bzw. einem bestimmten Drehwinkel 104 gedreht werden darf, um sicher zum Ausschnitt 114 bzw. zur Neutralposition zu gelangen.

Die bei dieser, der Anmelderin zumindest intern bekannten, Gestaltung gegebene Forderung von der Softwareseite, dass die Höhendifferenz zwischen den beiden Ausschnitten 112, 116 über einem bestimmten Wert (z.B. mindestens 1 mm) inklusive aller Toleranzen liegen muss, schränkt die Umsetzung in mechanische Bauteile ein. Maßgebend dafür ist der feste Zusammenhang zwischen dem Schaltgassenabstand, dem Stiftdurchmesser und den verbleibenden Steghöhen zwischen den benachbarten Ausschnitten 112, 116. Prinzipielles Problem ist bei der Umsetzung der Höhendifferenz von z.B. mindestens 1 mm zwischen dem Ausschnitt 112 und 116 - zumindest bei der der Anmelderin bekannten Gestaltung -, dass dadurch ein instabiler Steg zwischen den benachbarten Ausschnitten 112 erzeugt wird. Bei der der Anmelderin bekannten Gestaltung ist dieser Steg derart dünn (2 mm), dass er keiner Dauerbelastung durch Antasten in Bewegungsrichtung des Doppelpfeils 102 bzw. in Wählrichtung standhält.

Der Erfindung liegt die Aufgabe zugrunde eine Getriebeeinrichtung mit einer Betätigungseinrichtung bzw. eine Betätigungseinrichtung zu schaffen, bei welcher auf einfache Weise und betriebssicher die Neutralgasse oder eine Neutralreferenz der Betätigungseinrichtung bzw. eines Getriebeaktors gefunden werden kann. Wünschenswert wäre es ferner, wenn eine derartige Gestaltung - zumindest in einer Weiterbildung - so gestaltet ist, dass sie eine, insbesondere elektronische, Steuerung aufweist, wobei die Neutralgasse bzw. die Neutralreferenz im Falle eines Referenz-"black outs" möglichst gut oder sogar in jedem Fall von der Steuerung wieder gefunden werden kann, ohne Schaltungen im Getriebe vorzunehmen.

Efindungsgemäß wird eine Getriebeeinrichtung gemäß Anspruch 1 oder gemäß Anspruch 2 oder gemäß Anspruch 5 vorgeschlagen. Eine erfindungsgemäße Betätigungseinrichtung ist Gegenstand des Anspruchs 14. Ein erfindungsgemäßes Verfahren ist Gegenstand des Anspruchs 15. Bevorzugte Gestaltungen sind Gegenstand der Unteransprüche.

Erfindungsgemäß wird insbesondere eine Getriebeeinrichtung für ein Kraftfahrzeug vorgeschlagen, die mehrere Endausgangsmechanismen aufweist, sowie eine Betätigungseinrichtung bzw. einen Getriebeaktor zum Betätigen dieser Endausgangsmechanismen. Für das Einlegen von Übersetzungsstufen weist die Betätigungseinrichtung zum Einwirken auf die Endausgangsmechanismen mehrere antreibbare Hauptbetätigungselemente auf, von denen zumindest eines ein erstes Hauptbetätigungselement und eines ein zweites Hauptbetätigungselement ist. Es ist vorgesehen, dass wahlweise mittels des bzw. eines ersten oder des bzw. eines zweiten Hauptbetätigungselements auf zumindest einen Endausgangsmechanismus eingewirkt werden kann, und zwar insbesondere um eine bzw. eine der diesem Endausgangsmechanismus zugeordnete(n) Übersetzungsstufe(n) einzulegen. Insbesondere kann vorgesehen sein, dass wahlweise mittels eines jeweiligen dieser Hauptbetätigungselemente wahlweise auf jeweils einen von mehreren oder von allen Endausgangsmechanismen eingewirkt werden kann. Bei - insbesondere im Vergleich - identischer Antriebsrichtung, insbesondere identischem Drehsinn, dieses ersten und zweiten Hauptbetätigungselements hängt die Bewegungsrichtung des Endausgangsmechanismus, auf den eines dieser beiden Hauptbetätigungselemente wahlweise einwirken kann, und zwar insbesondere um eine Übersetzungsstufe einzulegen, davon ab, welches dieser beiden Hauptbetätigungselemente auf den betreffenden Endausgangsmechanismus einwirkt. Es ist dabei also insbesondere vorgesehen, dass der betreffende Endausgangsmechanismus in einer ersten Richtung bewegt wird, wenn dass erste Hauptbetätigungselement auf diesen betätigend einwirkt, und in einer zweiten, insbesondere der ersten entgegengesetzten, Richtung, wenn stattdessen das zweite Hauptbetätigungselement auf diesen einwirkt, wobei in diesen beiden Fällen das erste und das zweite Hauptbetätigungselement in der gleichen Richtung angetrieben werden. Es kann auch vorgesehen sein, dass das jeweils nicht-aktive Hauptbetätigungselement mit dem aktiven Hauptbetätigungselement mitbewegt wird.

Es ist insbesondere vorgesehen, dass das erste und das zweite Hauptbetätigungselement jeweils in verschiedenen, insbesondere entgegengesetzten, Richtungen bewegt bzw. angetrieben werden kann, wobei die eine - für beide Hauptbetätigungselemente gleiche - Richtung für das Einlegen einer Übersetzungsstufe bestimmt ist und die andere zum Zurückbewegen des Hauptbetätigungselements bestimmt ist, und zwar insbesondere zum Zurückbewegen in Richtung einer Neutralstellung, ohne dass dabei bzw. dadurch ein bzw. der Endausgangsmechanismus bewegt wird, mittels welchem zuvor eine Übersetzungsstufe eingelegt wurde.

Erfindungsgemäß wird ferner insbesondere eine Getriebeeinrichtung für ein Kraftfahrzeug vorgeschlagen, bei der eine Betätigungseinrichtung ein oder mehrere - vorzugsweise zwei - antreibbare Hauptbetätigungselemente für das Einwirken auf Endausgangsmechanismen für das Einlegen von Übersetzungsstufen aufweist. Vorzugsweise ist eines dieser Hauptbetätigungselemente ein erstes und eines ein zweites Hauptbetätigungselement. Es ist insbesondere vorgesehen, dass jedem der Hauptbetätigungselemente Hauptbetätigungselement-Neutralstellungen zugeordnet sind. Diese Hauptbetätigungselement-Neutralstellungen sind insbesondere solche, die für das betreffende Hauptbetätigungselement eine Neutralgasse bilden. In diesen Hauptbetätigungselement-Neutralstellungen kann das jeweilige Hauptbetätigungselement zum Wählen eines Endausgangsmechanismus, auf den zum Einlegen einer Übersetzungsstufe eingewirkt werden soll, bewegt werden, und zwar insbesondere unabhängig von den Stellungen der Endausgangsmechanismen. Es ist - insbesondere bei dieser Gestaltung - vorgesehen, dass wenigstens eine Anschlageinrichtung für das bzw. die Hauptbetätigungselemente vorgesehen ist, die so positioniert sind, dass ein an dieser Anschlageinrichtung anschlagendes Hauptbetätigungselement in einer Hauptbetätigungselement-Neutralstellung positioniert ist, wobei durch eine Bewegung des Hauptbetätigungselements entlang dieses Anschlag ein Endausgangsmechanismus wählbar ist, und zwar insbesondere ein Endausgangsmechanismus, auf den mittels des Hauptbetätigungselements zum Einlegen einer Übersetzungsstufe eingewirkt werden soll. Dieses Einwirken kann dann insbesondere so erfolgen, dass beispielsweise in einer Richtung quer zu einer Neutralgasse des Hauptbetätigungselements dieses Hauptbetätigungselement bewegt wird und - insbesondere nach Überstreichen eines gewissen Leerweges - belastend auf den entsprechenden Endausgangsmechanismus einwirkt.

Erfindungsgemäß wird ferner insbesondere eine Getriebeeinrichtung für ein Kraftfahrzeug vorgeschlagen, bei der Endausgangsmechanismen vorgesehen sind, die jeweils ein Verbindungselement, wie Schaltschiene oder Schaltgabel, aufweisen. Ferner ist eine Betätigungseinrichtung bzw. ein Getriebeaktor vorgesehen, die eine Betätigungs- bzw. zentrale Schaltwelle aufweist. Diese Betätigungswelle ist axial verschieblich und dreh- bzw. schwenkbar angeordnet. Die Betätigungseinrichtung weist ferner zum Betätigen der Endausgangsmechanismen bzw. der Verbindungselemente der Endausgangsmechanismen zwei Hauptbetätigungselemente auf. Mittels dieser Hauptbetätigungselemente kann derart auf die Endausgangsmechanismen eingewirkt werden, dass eine jeweilige Übersetzungsstufe eingelegt wird. Die Hauptbetätigungselemente können beispielsweise als Schaltfinger ausgebildet sein. Ferner ist vorgesehen, dass die Betätigungseinrichtung ein oder mehrere Nebenbetätigungselemente aufweist. Mittels dieser Nebenbetätigungselemente kann auf Endausgangsmechanismen derart eingewirkt werden, dass eine jeweils eingelegte Übersetzungsstufe ausgelegt wird, und/oder Übersetzungsstufen gesperrt werden. Diese beiden Hauptbetätigungselemente, also das erste Hauptbetätigungselement und das zweite Hauptbetätigungselement, sind in Umfangsrichtung der Betätigungswelle gesehen, versetzt zueinander angeordnet. Weiter ist insbesondere bei dieser Gestaltung vorgesehen, dass diese beiden, insbesondere einander zugeordneten, Hauptbetätigungselemente sich in beabstandeten, quer zur Achsrichtung der Betätigungswelle gelegenen Ebenen, von dieser Betätigungswelle erstrecken, bzw. in derartigen Ebenen wirken. Es ist bei dieser Gestaltung weiter vorgesehen, dass wahlweise eines dieser zwei Hauptbetätigungselemente auf einen bzw. auf einen gewählten Endausgangsmechanismus derart einwirken kann, dass eine vorbestimmte Übersetzungsstufe eingelegt wird. Dabei kann vorgesehen sein, dass das betreffende Hauptbetätigungselement derart bzw. dadurch gewählt wird, dass die Betätigungswelle in eine entsprechende Axialposition bewegt wird, bei welcher dieses Hauptbetätigungselement bei einem anschließenden Drehen bzw. Schwenken - insbesondere nach Überfahren eines gewissen Leerwegs - den betreffenden Endausgangsmechanismus entsprechend belasten kann. Weiter ist insbesondere bei dieser Gestaltung vorgesehen, dass bei jeweils gleichem Drehsinn der Betätigungswelle beim Einwirken des einen Hauptbetätigungselements auf den betreffenden Endausgangsmechanismus das Verbindungselements dieses Endausgangsmechanismus in einer ersten Richtung bewegt wird und beim Einwirken des anderen Hauptbetätigungselements auf diesen Endausgangsmechanismus dessen Verbindungselement in einer zweiten, der ersten entgegengesetzten, Richtung, bewegt wird.

Dieses Einwirken dieser beiden Hauptbetätigungselemente auf den jeweils gleichen Endausgangsmechanismus erfolgt aber insbesondere wahlweise. Es kann also insbesondere vorgesehen sein, dass dann, wenn das Verbindungselements zum Einlegen einer entsprechenden Übersetzungsstufe in die eine Richtung bewegt werden soll, das eine dieser beiden Hauptbetätigungselemente gewählt wird und dann auf diesen Betätigungsmechanismus einwirkt, und bei gewünschter Bewegungsrichtung des Verbindungselements in der entgegengesetzten Richtung das andere Hauptbetätigungselement zum Einwirken auf diesen Endausgangsmechanismus gewählt wird, so dass mittels dieses anderen Hauptbetätigungselements dann die jeweils andere Übersetzungsstufe, die diesem Endausgangsmechanismus zugeordnet wird, eingelegt werden kann. Dabei ist also insbesondere vorgesehen, dass in diesen beiden Fällen jeweils die Antriebsrichtung bzw. der Drehsinn der Betätigungswelle gleich ist. Es ist dabei also insbesondere vorgesehen, dass die Schaltrichtungsänderung für das Einlegen von Übersetzungsstufen durch das Einwechseln des jeweiligen Hauptbetätigungselements erreicht wird, so dass jedem Hauptbetätigungselement eine bestimmte Schaltrichtung der Endausgangsmechanismen zugeordnet ist, wobei diese Hauptbetätigungselemente allerdings in der gleichen Richtung angetrieben werden.

Die erfindungsgemäße Getriebeeinrichtung weist insbesondere eine Mehrzahl von Radsätzen auf, die Übersetzungsstufen bzw. Gänge bilden. Es ist insbesondere vorgesehen, dass den Endausgangsmechanismen jeweils zumindest eine Übersetzungsstufe zugeordnet ist, welche mittels des jeweils betreffenden Endausgangsmechanismus, dem diese Übersetzungsstufe(n) zugeordnet ist, eingelegt bzw. ausgelegt werden kann. Bevorzugt ist vorgesehen, dass jede der Übersetzungsstufen genau einem der Endausgangsmechanismen zugeordnet ist, während wenigstens einem Endausgangsmechanismus mehrere, insbesondere zwei, Übersetzungsstufen zugeordnet sind. Es ist insbesondere vorgesehen, dass auf zumindest einen der Endausgangsmechanismen, und bevorzugt auf mehrere, besonders bevorzugt auf alle, wahlweise mittels des ersten oder des zweiten Hauptbetätigungselements eingewirkt werden kann. In bevorzugter Gestaltung weisen die Endausgangsmechanismen jeweils ein Verbindungselement auf, welches beispielsweise eine Schaltgabel oder Schaltschiene ist. Zur Vereinfachung wird anstelle von Verbindungselement auch von Schaltschiene gesprochen, wobei eine Schaltschiene nur eine beispielhafte Gestaltung ist. Stattdessen kann beispielsweise auch eine Schaltgabel oder ein anders gestaltetes Element vorgesehen sein. Bevorzugt sind die Schaltschienen unterschiedlicher Endausgangsmechanismen parallel, und besonders bevorzugt beabstandet, zueinander ausgerichtet. In besonders bevorzugter Gestaltung sind die Schaltschienen axial verschieblich angeordnet.

In bevorzugter Gestaltung weisen die Endausgangsmechanismen, und insbesondere die Schaltschienen der Endausgangsmechanismen, jeweils wenigstens ein Schaltmaul auf, das beispielsweise in oder an einer solchen Schaltschiene angeordnet ist. Ein solches Schaltmaul kann in vorteilhafter Gestaltung geschlossen ausgebildet sein. Dieses Schaltmaul dient für den Eingriff eines Haupt- und/oder Nebenbetätigungselementen. Es kann vorgesehen, dass für den Eingriff von Haupt- und Nebenbetätigungselementen an jeden Endausgangsmechanismus genau ein Schaltmaul angeordnet ist. Es können aber auch mehrere Schaltmäuler an jedem Endausgangsmechanismus angeordnet sein. Beispielsweise können separate Schaltmäuler für die den Eingriff von Hauptbetätigungselementen, einerseits, und für den Eingriff von Nebenbetätigungselementen, andererseits, vorgesehen sein. In besonders zu bevorzugender Gestaltung ist vorgesehen, dass jedes der Schaltmäuler für jedes Haupt- und jedes Nebenbetätigungselement, dass mit diesem Schaltmaul in Verbindung bzw. in Eingriff gebracht werden kann, eine, insbesondere separate, Funktionskante und / oder Funktionsflächen aufweist. Funktionsflächen bzw. Funktionsgegenflächen können an den betreffenden Haupt- bzw. Nebenbetätigungselementen vorgesehen sein. Dabei ist insbesondere vorgesehen, dass im Zusammenwirken von Haupt- bzw. Nebenbetätigungselementen und Schaltmaul ein Eingriff über die Funktionskanten bzw. Funktionsflächen erfolgt.

Es kann vorgesehen sein, dass die Übersetzungsstufen bzw. Radsätze jeweils ein Rad - insbesondere Losrad - aufweisen, das drehbeweglich gegenüber einer es tragenden Welle angeordnet und zum Einlegen der betreffenden Übersetzungsstufe drehfest mit dieser Welle verbunden werden kann. Hierzu kann beispielsweise vorgesehen sein, dass der betreffende Endausgangsmechanismus eine Endausgangsteil, wie - z.B. verschieblich - Kupplungsmuffe, aufweist, mittels welchem eine solche Verbindung erzeugt und gelöst werden kann. Die Anordnung mit den Übersetzungsstufen und der Endausgangsmechanismen kann auch als Getriebe (im engen Sinne) bezeichnet werden und so von der Betätigungseinrichtung abgegrenzt werden.

Die Hauptbetätigungselemente sind vorzugsweise Schaltfinger. Die Nebenbetätigungselemente können beispielsweise Nocken oder Doppelnocken sein.

Es ist insbesondere vorgesehen, dass zumindest einem Endausgangsmechanismus zwei Übersetzungsstufen zugeordnet sind, die mittels diesem einlegbar sind. Es kann vorgesehen sein, dass jedem der Endausgangsmechanismen jeweils zwei solcher Übersetzungsstufen zugeordnet sind. Ferner kann vorgesehen sein, dass einem Teil der Endausgangsmechanismen lediglich eine Übersetzungsstufe zugeordnet ist. Dies kann beispielsweise bei Getrieben oder Teilgetrieben gegeben sein, die eine ungerade Anzahl von Übersetzungsstufen bzw. Gängen aufweisen. Die Endausgangsmechanismen sind insbesondere beweglich, vorzugsweise axialbeweglich, angeordnet.

Es ist insbesondere vorgesehen, dass Endausgangsmechanismen, denen zwei Übersetzungsstufen zugeordnet sind, in zwei verschiedene Gangstellungen bewegt werden können, in denen der betreffende Gang bzw. die betreffende Übersetzungsstufe eingelegt ist. Dabei kann beispielsweise ein Bezugspunkt an einem Verbindungselement oder ein Schaltmaul die jeweilige Stellung bestimmen bzw. definieren. Bei solchen Endausgangsmechanismen, denen zwei Übersetzungsstufen zugeordnet sind, sind diese Gangstellungen insbesondere so angeordnet, dass zwischen diesen beiden Gangstufen eine Neutralstellung des betreffenden Endausgangsmechanismus bzw. des betreffenden Verbindungselements vorgesehen ist, so dass insbesondere diese Neutralstellung überfahren werden muss, damit von einer der beiden Übersetzungsstufen in die andere, dem gleichen Endausgangsmechanismus zugeordneten Übersetzungsstufe, geschaltet wird.

In besonders zu bevorzugender Gestaltung weisen die Endausgangsmechanismen jeweils ein Verbindungselement sowie ein Endausgangselement, insbesondere Kupplungsmuffe, auf, oder werden von diesen gebildet.

Es ist insbesondere vorgesehen, dass die Hauptbetätigungselemente jeweils derart beweglich angeordnet sind, dass sie so bewegt werden können, dass sie auf einen Endausgangsmechanismus belastend einwirken, und dass sie allerdings auch so bewegt werden können, dass bei ihrer Bewegung nicht auf einen Endausgangsmechanismus einwirken. Insbesondere ist dies so, dass mittels eines jeweiligen der Hauptbetätigungselemente ein Endausgangsmechanismus zum Einlegen einer Übersetzungsstufe belastet werden kann, wobei dieses Hauptbetätigungselement anschließend in seine Neutralstellung bzw. Neutralgasse und anschließend in dieser, bzw. entlang dieser Neutralgasse bewegt werden kann, ohne dass dabei der zuvor eingelegte Gang bzw. Übersetzungsstufe wieder ausgelegt wird. Insbesondere ist vorgesehen, dass ein derart eingelegter Gang mittels eines Nebenbetätigungselements ausgelegt wird, wenn dieses oder ein anderes Hauptbetätigungselement anschließend in Schaltrichtung in einer versetzten Ebene bewegt wird, bzw. in vorbestimmter Weise in einer Schaltgasse bewegt wird, die einem anderen Endausgangsmechanismus zugeordnet ist. Dabei ist insbesondere vorgesehen, dass bei dieser Bewegung in einer anderen Schaltgasse zunächst ein "Leerweg" durchlaufen wird, auf dem das betreffende Hauptbetätigungselement zunächst noch nicht auf diesen anderen Endausgangsmechanismus einwirkt, wobei allerdings - insbesondere durch entsprechende Kopplung mit einem oder mehreren Nebenbetätigungselementen - bewirkt wird, dass diese Nebenbetätigungselemente in sämtlichen anderen Schaltgassen des gleichen Getriebes bzw. Teilgetriebes wirken, also in den Schaltgassen, die nicht dem Zielgang zugeordnet sind. Es ist also insbesondere vorgesehen, dass diese Nebenbetätigungselemente auf die Endausgangsmechanismen der anderen Schaltgasse einwirken und diese Endausgangsmechanismen - sofern sie nicht in einer Neutralstellung sind - in diese Neutralstellung bewegen. Ferner ist dabei besonders bevorzugt vorgesehen, dass diese Nebenbetätigungselemente so auf die entsprechenden anderen Endausgangsmechanismen einwirken, dass diese anderen Endausgangsmechanismen in ihrer Beweglichkeit gesperrten werden, so dass die Übersetzungsstufen bzw. Gänge, die diesem zugeordnet sind, gesperrt sind. Ein solches Sperren kann beispielsweise sicherstellen, dass durch ungewollte Einflüsse, wie beispielsweise Vibrationen oder dergleichen, Endausgangsmechanismen, denen nicht dem Zielgang zugeordnet ist, ungewollt in eine Gangstellung bewegt werden.

Besonders bevorzugt ist vorgesehen, dass dann, wenn sichergestellt ist, dass in sämtlichen anderen Schaltgassen keine Endausgangsmechanismen in einer Gangstellung sind, bzw. sichergestellt ist, dass diese Endausgangsmechanismen in einer Neutralstellung sind, bzw. sichergestellt ist, dass die dort diesen zugeordneten Gänge ausgelegt sind, bei fortgesetzter Bewegung das betreffende (aktive) Hauptbetätigungselement so auf den Endausgangsmechanismus des Zielganges einwirkt, dass der Zielgang bzw. die Zielübersetzungsstufe eingelegt wird. Bei den Gestaltungen mit Betätigungswelle ist insbesondere vorgesehen, dass ein erster Drehwinkelbereich vorgesehen ist, in dem das aktive Hauptbetätigungselement entsprechend einem "Leerhub" bewegt wird, wobei gleichzeitig Gänge in anderen Schaltgassen ausgelegt werden bzw. sichergestellt wird, dass diese ausgelegt sind, und wobei in einem darauffolgenden Drehwinkelbereich der Betätigungswelle das Hauptbetätigungselement auf den betreffenden Endausgangsmechanismus derart einwirkt, dass der Zielgang eingelegt wird. Es sei angemerkt dass dann, wenn ein alter Gang und ein Zielgang dem gleichen Endausgangsmechanismus zugeordnet sind, bevorzugt der alte Gang mittels eines Hauptbetätigungselements, dass in der entsprechenden Gasse wirkt, ausgelegt wird. Abgesehen von diesem Fall ist vorzugsweise vorgesehen, dass die Hauptbetätigungselemente das Auslegen von Gängen bzw. Übersetzungsstufen nicht bewirken.

Es ist insbesondere vorgesehen, dass mittels der Hauptbetätigungselemente und der Nebenbetätigungselemente stets sichergestellt ist, dass in dem Getriebe-, bzw. sofern mehrere Teilgetriebe vorgesehen sind, in jedem dieser Teilgetriebe - zeitgleich - nur ein Gang, bzw. Übersetzungsstufe, eingelegt sein kann.

Für das Zusammenwirken von Hauptbetätigungselementen mit den Endausgangsmechanismen kann beispielsweise vorgesehen sein, dass die - insbesondere beiden - Hauptbetätigungselemente sowie die Endausgangsmechanismen entsprechend ausgebildete und positionierte Eingriffsbereiche bzw. Funktionsflächen aufweisen. Beispielsweise kann vorgesehen sein, dass die beiden in Rede stehenden Hauptbetätigungselemente an einer Betätigungswelle bzw. zentralen Schaltwelle axial versetzt und in Umfangsrichtung verdreht, beispielsweise um 180° verdreht, angeordnet sind und fingerartig ausgebildet sind. Insbesondere in Kombination hiermit kann vorgesehen sein, dass in den Endausgangsmechanismen jeweils ein, insbesondere geschlossenes, Schaltmaul vorgesehen ist, in welches wahlweise eines dieser beiden Hauptbetätigungselemente belastend eingreifen kann, um den betreffenden Endausgangsmechanismus in einer seiner beiden Bewegungsrichtungen zu bewegen. Dabei kann beispielsweise vorgesehen sein, dass die beiden Hauptbetätigungselemente in Achsrichtung dieser Betätigungswelle versetzt an dieser angeordnet sind. Dies kann beispielsweise so sein, dass diese unmittelbar nebeneinanderliegend oder in größerem Abstand zueinander angeordnet sind.

In einer bevorzugten Gestaltung ist vorgesehen, dass die Hauptbetätigungselemente sich in ihrer Neutralposition bzw. an einer einer Neutralgassenposition entsprechenden Position im Wesentlichen quer, vorzugsweise senkrecht, zur Bewegungsrichtung der Endausgangsmechanismen bzw. der Verbindungselemente erstrecken.

In einer bevorzugten Gestaltung ist vorgesehen, dass die Betätigungseinrichtung eine Betätigungswelle aufweist und das erste Hauptbetätigungselement und das zweite Hauptbetätigungselement auf bzw. in verschiedenen Ebenen wirken und unter einem Winkel, insbesondere 180°-Winkel, zueinander angeordnet sind. Ein solcher Winkel kann aber auch von 180° abweichen. Es kann beispielsweise vorgesehen sein, dass die beiden Hauptbetätigungselemente axial versetzt und in Drehrichtung geschwenkt zueinander angeordnet sind. Sie können beispielsweise unmittelbar nebeneinanderliegend in axialer Richtung versetzt sein. Es können aber auch Zwischenräume gebildet werden. Bevorzugt erstrecken sich die Hauptbetätigungselemente, und insbesondere das erste und das zweite Hauptbetätigungselement, im Wesentlichen radial zur Längsachse einer Betätigungswelle, und zwar vorzugsweise um in Umfangsrichtung der um 180° versetzt zueinander und axial versetzt.

Bevorzugt ist ferner, dass die Betätigungseinrichtung zum Einwirken auf Endausgangsmechanismen für das Erzeugen von Bewegungen für das Auslegen von Gängen und/oder zum Sperren von Gängen wenigstens ein Nebenbetätigungselement aufweist. Diese Nebenbetätigungselemente und die Endausgangsmechanismen, insbesondere Schaltschienen, können insbesondere zu diesem Zweck entsprechend gestaltete Funktionsflächen aufweisen, die insbesondere auch auf die Funktionsflächen für das Zusammenwirken von Hauptbetätigungselementen und Endausgangselementen abgestimmt sein können, um sicherzustellen, dass vor dem Einlegen eines Ganges im gleichen Getriebe oder Teilgetriebe alle anderen Gänge ausgelegt sind.

Die Endausgangsmechanismen können beispielsweise ein Verbindungselement, wie zum Beispiel Schaltschiene oder Schaltgabel, aufweisen. Es kann insbesondere vorgesehen sein, dass ein Hauptbetätigungselemente in ein solches Verbindungselement eingreift, wenn es den betreffendenden Endausgangsmechanismus belastet bzw. bewegt.

In bevorzugter Gestaltung sind zwischen den Schaltschienen, die bevorzugt parallel zueinander ausgerichtet sind und beabstandet sind, Leergassen vorgesehen. Dabei ist besonders bevorzugt vorgesehen, dass das eine der beiden Hauptbetätigungselemente, das momentan nicht aktiv ist, im Bereich der Ebene einer solchen Leergasse angeordnet ist bzw. in eine solche Leergasse schwenkt, wenn das zugeordnete andere Hauptbetätigungselement aktiv ist.

In bevorzugter Gestaltung weist die Getriebeeinrichtung zwei oder mehr Teilgetriebe auf. Besonders bevorzugt ist dabei vorgesehen, dass für jedes dieser Teilgetriebe separate Haupt- und/oder Nebenbetätigungselemente vorgesehen sind. Dabei kann vorgesehen sein, dass diese, verschiedenen Teilgetrieben zugeordneten Haupt- bzw. Nebenbetätigungselemente auf genau einer Betätigungswelle angeordnet sind. Es können aber - im Falle mehrerer Teilgetriebe - auch gemeinsame Haupt- bzw. Nebenbetätigungselemente für mehrere oder alle Teilgetriebe vorgesehen sein. Das Getriebe kann insbesondere eine Doppelkupplungsgetriebe (DKG) oder Parallelschaltgetriebe (PSG) sein. Es kann auch vorgesehen sein, dass die Getriebeeinrichtung lediglich ein Teilgetriebe aufweist. Die Getriebeeinrichtung kann beispielsweise als automatisiertes Schaltgetriebe (ASG) ausgebildet sein. Die Getriebeeinrichtung kann auch als Handschaltgetriebe ausgebildet sein.

In einer bevorzugten Gestaltung ist ein elektronisches Steuergerät zum Ansteuern der Betätigungsvorrichtung vorgesehen, wobei anzumerken ist, dass sich dies nicht auf den Fall bezieht, in dem die Getriebeeinrichtung als Handschaltgetriebe ausgestaltet ist. Es kann vorgesehen sein, dass dieses elektronische Steuergerät Elektromotoren ansteuert, die wiederum Bewegungen der Betätigungseinrichtung ansteuern, bzw. als Bestandteil der Betätigungseinrichtung eine eingangsseitige Last dort erzeugen. Es kann vorgesehen sein, dass ein Elektromotor für das Wählen und ein Elektromotor für das Schalten vorgesehen ist. Insbesondere kann bei der Gestaltung mit dreh- bzw. schwenk- und axialbeweglicher Betätigungswelle vorgesehen sein, dass ein Elektromotor die Bewegung in Axialrichtung und ein anderer Elektromotor die Bewegung in Drehrichtung bewirkt. Bei Gestaltungen mit mehreren Teilgetrieben kann vorgesehen sein, dass für jedes Teilgetriebe separate Elektromotoren vorgesehen sind, oder gemeinsame Elektromotoren für beide Teilgetriebe vorgesehen sind. Vorzugsweise ist wenigstens ein Inkrementalgeber vorgesehen, welcher die Stellungsänderung der Betätigungseinrichtung und / oder des Getriebes ermittelt. Insbesondere kann vorgesehen sein, dass für die Wählrichtung und die Schaltrichtung separate Inkrementalgeber vorgesehen sind.

Bevorzugt ist ferner, dass genau zwei Hauptbetätigungselemente zum Einlegen aller Übersetzungsstufen des gleichen Teilgetriebes bzw. - sofern dies nur ein Teilgetriebe aufweist - des gleichen Getriebes aufweist. Es kann auch vorgesehen sein, dass genau zwei Hauptbetätigungselemente für mehrere bzw. alle Teilgetriebe vorgesehen sind, wobei mittels diesen auf sämtliche Endausgangsmechanismen beider Teilgetriebe einwirken werden kann.

Es können aber auch für jedes Teilgetriebe mehr als zwei Hauptbetätigungselemente vorgesehen sein. Es ist allerdings insbesondere vorgesehen, dass diese sich in erste und zweite Hauptbetätigungselemente aufteilen bzw. klassifizieren lassen.

Die Anschlagseinrichtung kann - muss allerdings nicht - eine Anschlagseinrichtung sein, welche das Hauptbetätigungselement unmittelbar kontaktiert. Es kann aber auch vorgesehen sein, dass eine solche Anschlagseinrichtung beispielsweise an einer Antriebseinrichtung - wie Elektromotor - vorgesehen ist. Ein solcher Anschlag kann insbesondere ein mechanischer Anschlag sein. Es sind aber auch anders gestaltete Anschläge möglich. Ferner kann vorgesehen sein, dass eine solche Anschlageinrichtung auf eine Betätigungswelle wirkt. Ferner kann vorgesehen sein, dass ein Gate vorgesehen ist, durch welchen beispielsweise ein Stift geführt wird, der in eine Anschlagposition gelangt. Ein solches Gate kann beispielsweise auch als Hülse ausgebildet sein, die sich um eine Betätigungswelle herum erstreckt und beispielsweise fest gegenüber einem Getriebegehäuse angeordnet ist.

Die Getriebeeinrichtung weist insbesondere ein Active Interlock auf.

Erfindungsgemäß wird ferner eine Betätigungseinrichtung für die Betätigung von Endausgangsmechanismen gemäß Anspruch 14 vorgeschlagen. Diese Betätigungseinrichtung weist wenigstens ein Hauptbetätigungselement und wenigstens ein Nebenbetätigungselement auf. Dabei ist insbesondere vorgesehen, dass die Betätigungseinrichtung zumindest zwei Hauptbetätigungselemente aufweist, von denen eines ein erstes Hauptbetätigungselement im Sinne der vorliegenden Anmeldung ist, und das andere ein zweites Hauptbetätigungselement im Sinne der vorliegenden Anmeldung. Diese Betätigungseinrichtung kann insbesondere so ausgestaltet sein, wie es in Bezug auf die Betätigungseinrichtung der erfindungsgemäßen Getriebeeinrichtung erläutert wird.

Erfindungsgemäß wird ferner insbesondere ein Verfahren gemäß Anspruch 15 vorgeschlagen.

Es ist also insbesondere vorgesehen, dass die Antriebseinrichtung zur Ermittlung der Neutralstellung bzw. Neutralgasse bzw. einer Referenzposition in dieser Neutralgasse stets mit der gleichen Antriebsrichtung angetrieben wird. Es kann also beispielsweise vorgesehen sein, dass ein Signal einer Steuereinrichtung an einen Elektromotor, der ein Hauptbetätigungselement in Schaltrichtung antreiben kann, gesandt wird, um diesen Elektromotor in einer vorgegebenen Drehrichtung anzutreiben.

Das Erreichen einer solchen Anschlagsposition kann beispielsweise durch eine Auswertung der Energieversorgung des Elektromotors ermittelt werden. Es kann beispielsweise ein Sprung in der Energieversorgung das Erreichen einer Anschlagbenutzung anzeigen. Es kann aber auch vorgesehen sein, dass aus dem Stillstand des Inkrementalgebers auf das Erreichen eines Anschlags geschlossen wird. Es kann auch vorgesehen sein, dass der Elektromotor über eine Zeitspanne bestromt wird, die mit Sicherheit zum Erreichen dieser Anschlagsposition ausreicht. Auch weitere Möglichkeiten sind möglich.

Im folgenden werden Ausführungsbeispiel der Erfindung anhand der Fig. erläutert, wodurch die Erfindung nicht beschränkt werden soll. Es zeigt:
Fig. 1 eine Teilansicht einer erfindungsgemäßen Getriebeeinrichtung;
Fig. 2 eine Teilansicht einer Betätigungswelle gemäß Fig. 1 mit zwei Hauptbetätigungselementen und Nebenbetätigungselementen;
Fig. 3a und 3beine Teilansicht einer erfindungsgemäßen Getriebeeinrichtung, wobei zwei unterschiedliche Stellungen der Betätigungseinrichtung gezeigt sind, und wobei diese Gestaltung beispielsweise mit der Gestaltung gemäß Fig. 1 und / oder 2 kombiniert sein kann,
Fig. 4 eine Teilansicht einer erfindungsgemäßen Getriebeeinrichtung, wobei diese Gestaltung beispielsweise mit der Gestaltung gemäß Fig. 1 und / oder 2 und / oder gemäß den Fig. 3a bzw. 3b kombiniert sein kann,
Fig. 5a eine der Anmelderin vorbekannte Gestaltung eines Gates für eine Betätigungseinrichtung mit zentraler Schaltwelle.

Fig. 5b eine Schnittansicht entlang der Linie Va-Vb aus Fig. 5a;

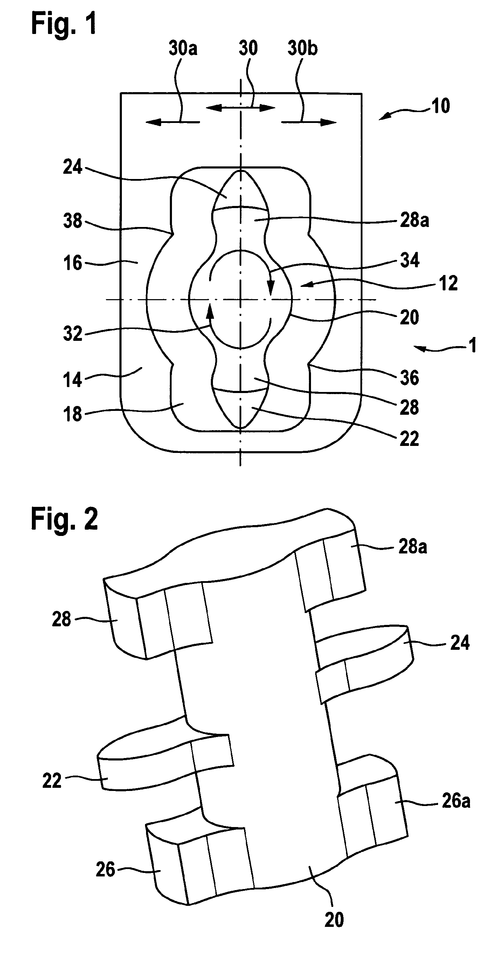

Fig. 1 zeigt eine Teilansicht einer beispielhaften erfindungsgemäßen Getriebeeinrichtung 1 mit mehreren - ebenfalls teilweise gezeigten - Endausgangsmechanismen 10 und mit einer - teilweise gezeigten - Betätigungseinrichtung 12 zum Betätigen dieser Endausgangsmechanismen 10. Die Getriebeeinrichtung 1 weist ferner eine Mehrzahl von in Fig. 1 nicht gezeigten Radsätzen auf, die Übersetzungsstufen bilden.

Hinsichtlich der Endausgangsmechanismen 10 ist in Fig. 1 eine Schaltschiene 14 bzw. ein Fortsatz 16 einer Schaltschiene 14 gezeigt, in dem ein Schaltmaul 18 vorgesehen ist. Dieser Fortsatz 16 ist insbesondere so an dem verbleibenden Teil der Schaltschiene 14 angeordnet, dass sich - in Fig. 1 - am oberen Ende des dort gezeigten Fortsatzes 16 die Schaltschiene fortsetzt, und zwar insbesondere mit einer Haupterstreckungsrichtung, die in Fig. 1 in horizontaler Richtung gegeben ist.

Die Schaltschiene 14 kann insbesondere mit einem Endausgangselement, wie Kupplungsmuffe, gekoppelt sein. Eine solche Kupplungsmuffe kann beispielsweise als Schiebemuffe ausgestaltet sein und dazu dienen, ein gegenüber einer Welle drehbewegliches Rad drehfest mit dieser zu schalten, um somit das Einlegen eines Ganges bzw. der Übersetzungsstufe zu bewirken. Die Räder der Getriebeeinrichtung, mittels welchen Übersetzungsstufen gebildet werden, sind insbesondere Zahnräder.

Die Betätigungseinrichtung 12 weist ein erstes Hauptbetätigungselement 22 sowie ein zweites Hauptbetätigungselement 24 auf. Ferner weist die Betätigungseinrichtung 12 Nebenbetätigungselemente 26, 26a, 28, 28a auf. Diese Haupt- und Nebenbetätigungselemente sind an der Betätigungswelle angeordnet. Dies kann beispielsweise auch Fig. 2 entnommen werden, die die Betätigungswelle 20 in teilweiser Ansicht mit den Haupt- 22, 24 und Nebenbetätigungselementen 26, 26a, 28, 28a in dreidimensionaler Ansicht zeigt.

In Fig. 1 ist die Projektion der Hauptbetätigungselemente 22, 24 sowie der Nebenbetätigungselemente 26, 26a auf bzw. in eine Schaltschienenebene gezeigt. Besonders wesentlich - insbesondere für dieses Ausführungsbeispiel - ist, dass zwei Hauptbetätigungselemente 22, 24 vorgesehen sind, die jedoch - wie gut Fig. 2 entnommen werden kann - auf bzw. in unterschiedlichen Ebenen wirken und jeweils in einem von 0° deutlich abweichenden Winkel zueinander angeordnet sind. Dies ist in den Fig. 1 und 2 so gezeigt, dass die beiden Hauptbetätigungselemente 22, 24 jeweils im Winkel von 180° angeordnet sind. Ein 180°-Winkel zwischen diesen beiden Hauptbetätigungselementen 22, 24 ist insbesondere im Zusammenwirken mit der Geometrie des in Fig. 1 gezeigten Schaltmauls 16 besonders vorteilhaft. Diese Geometrie ist insbesondere so, dass das Schaltmaul in Bewegungsrichtung 30 der Schaltschiene 14 in beiden Orientierungen durch ein Kreissegment gegrenzt wird, wobei der Übergangsbereich dieser beiden Kreissegmente durch annähernd rechteckförmige Bereiche gebildet wird. Die Erstreckungsrichtung des Schaltmauls in der Bewegungsrichtung 30 ist dabei größer als in der senkrecht dazu gelegenen Richtung.

Mittels der Hauptbetätigungselemente 22, 24 kann so auf die Schaltschienen eingewirkt werden, dass diese axial bewegt werden. Diese axiale Bewegungsrichtung ist in Fig. 1 schematisch durch den Doppelpfeil 30 angedeutet. Um eine solche axiale Verlagerung der Schaltschiene 14 zu bewirken, wird die Betätigungswelle 20 so positioniert, dass ein Hauptbetätigungselement 22 bzw. 24 im Bereich bzw. innerhalb eines Schaltmauls positioniert ist. Anschließend - und insbesondere ausgehend von einer in Fig. 1 gezeigten Neutralstellung des Hauptbetätigungselements 22 bzw. 24 - wird die Betätigungswelle 20 verdreht, so dass das betreffende Hauptbetätigungselement 22 bzw. 24 nach Überschreiten eines Leerhubs mit der betreffenden, gewählten Schaltschiene in Kontakt kommt und anschließend bei fortgesetzter Bewegung belastet, so dass diese betreffende Schaltschiene 14 ebenfalls bewegt wird. In Abhängigkeit davon, welches der beiden Hauptbetätigungselemente 22, 24 hierbei innerhalb des Schaltmauls bzw. Ausschnitts 18 positioniert ist bzw. betätigend auf die Schaltschiene 14 einwirkt, wird die Schaltschiene dabei in die eine 30a oder die andere 30b ihrer beiden, entgegengesetzten Bewegungsrichtungen 30a, 30b bewegt.

In beiden dieser Fälle ist allerdings vorgesehen, dass die Betätigungswelle 20 jeweils in der gleichen Antriebsrichtung bzw. dem gleichen Drehsinn angetrieben wird, wenn mittels eines Hauptbetätigungselements 22, 24 die Schaltschiene 14 so bewegt werden soll, dass eine Übersetzungsstufe eingelegt wird. Diese Bewegungsrichtung bzw. dieser Drehsinn ist schematisch durch den Pfeil 32 angedeutet. Die Betätigungswelle 20 ist allerdings so drehbar gelagert, dass sie auch in der entgegengesetzten Richtung bzw. im entgegengesetzten Drehsinn, der schematisch durch den Pfeil 34 angedeutet ist, bewegt werden kann. Es kann vorgesehen sein, dass diese Bewegungsrichtung 34 allerdings durch einen Anschlag oder dergleichen gesperrt ist, wenn die Hauptbetätigungselemente 22, 24 in der in Fig. 1 gezeigten Neutralstellung sind. In der Bewegungsrichtung 34 kann die Betätigungswelle 20 also insbesondere bewegt werden, wenn sie zuvor aus ihrer Neutrallage entsprechend dem Drehsinn 32 bewegt bzw. ausgelenkt wurde. Sofern die Betätigungswelle 20 entsprechend dem Drehsinn 34 bewegt wird, belastet keines der Hauptbetätigungselemente 22, 24 eine der Schaltschienen 14. Diese Hauptbetätigungselemente 22, 24 können also bewegt werden, ohne dass dabei ein Endausgangsmechanismus 10 bzw. eine Schaltschiene 14 bewegt wird.

Die Nebenbetätigungselemente 26, 26a, 28, 28a, die wie die Hauptbetätigungselemente 22, 24 fest an der Betätigungswelle 20 angeordnet sind, dienen dazu, dass dann, wenn die Betätigungswelle 20 im Drehsinn 32 gedreht bzw. geschwenkt wird, mittels dieser Nebenbetätigungselemente sichergestellt wird, dass ein gegebenenfalls eingelegter Gang des gleichen Teilgetriebes ausgelegt wird und anschließend gesperrt wird bzw. sämtliche Übersetzungsstufen des gleichen Teilgetriebes gesperrt werden. Bei diesem Sperren blockiert ein oder mehrere Nebenbetätigungselemente die Schaltschienen des gleichen Teilgetriebes, in denen nicht ein Hauptbetätigungselement zum Einwirken auf die entsprechende Schaltschiene nach einem Leerhub positioniert ist.

In Fig. 2 ist gut zu erkennen, dass die Hauptbetätigungselemente 22, 24 axial versetzt zueinander angeordnet sind. Wiederum axial versetzt zu diesen angeordnet sind die Nebenbetätigungselemente.

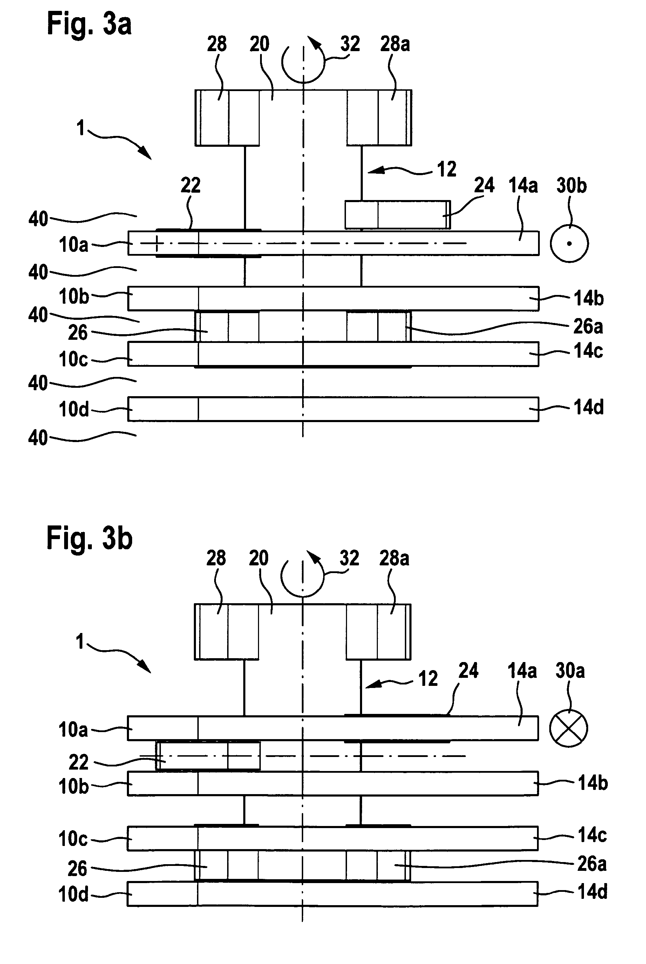

Wie gut der Fig. 1 entnommen werden kann, sind die Schaltmäuler 18 bzw. die Schaltschienen 14 geschlossen ausgeführt. Die Schaltmäuler 18 weisen für jedes Hauptbetätigungselement 22, 24 und jedes Nebenbetätigungselement 26 bzw. 26a bzw. 28 bzw. 28a eine Funktionskante 36, 38 auf. Zwischen den Schaltschienen 14 sind - in Achsrichtung der Betätigungswelle 20 bzw. in Wählrichtung gesehen - Leergassen vorgesehen, was gut in Fig. 3a und 3b zu erkennen ist. Ferner ist dort zu erkennen, dass die Schaltschienen parallel zueinander und nebeneinanderliegend angeordnet sind. Zur besseren Unterscheidbarkeit sind die verschiedenen Schaltschienen 14 in den Fig. 3a und 3b mit den Bezugszeichen 14a, 14b, 14c und 14d versehen. Die verschiedenen Endausgangsmechanismen 10 sind entsprechend mit den Bezugszeichen 10a, 10b, 10c und 10d bezeichnet. Die Bezugszeichen in Fig. 3a und 3 b entsprechen ansonsten im Wesentlichen denen, die auch in den Fig. 1 und 2 verwendet wurden.

Den Fig. 3a und 3b kann auch gut entnommen werden, dass immer nur ein Hauptbetätigungselement 22 bzw. 24 mit der bzw. einer Schaltschiene 14 im Eingriff ist bzw. in dieser so positioniert ist, dass es durch anschließende Drehung belastend auf die entsprechende Schaltschiene einwirken kann, während das andere Hauptbetätigungselement in eine Leergasse 40 zwischen den (jeweiligen) Schaltschienen geschwenkt wird bzw. im Bereich einer solcher Leergasse 40 angeordnet ist.

Bei der (Axial)Stellung der Betätigungswelle 20 gemäß Fig. 3a ist es so, dass das zweite Hauptbetätigungselement 24 im Bereich einer solchen Leergasse 40 angeordnet ist, und das erste Hauptbetätigungselement 22 mit der Schaltschiene 14a in Eingriff ist bzw. in dem Schaltmaul 18 der Schaltschiene 14a angeordnet ist. Bei der (Axial)Stellung der Betätigungswelle 20 gemäß Fig. 3b, die gegenüber der gemäß Fig. 3a nach unten verschoben ist, ist dies so, dass das erste Hauptbetätigungselement 22 im Bereich einer Leergasse 40 angeordnet ist, während das zweite Hauptbetätigungselement 24 innerhalb des Schaltmauls 18 angeordnet ist. Während ausgehend von der in Fig. 3a gezeigten Stellung, bei der das Hauptbetätigungselement 22 noch in seiner Neutralstellung ist, die Schaltschiene 14a in Richtung des Pfeils 30b (nach Überwinden eines Leerhubs) bewegt werden kann, kann diese Schaltschiene 14a in der Stellung gemäß Fig. 3b entsprechend in der entgegengesetzten Richtung, also in Richtung des Pfeils 30a, bewegt werden.

In beiden dieser Fälle ist der Drehsinn der die entsprechende Bewegung des Hauptbetätigungselements 22 bzw. 24 erzeugenden Bewegung bzw. der Drehsinn der Betätigungswelle 20 jeweils identisch, wie der Pfeil 32 in den Fig. 3a und 3b verdeutlicht. Das Einlegen von Gängen bzw. Übersetzungsstufen erfolgt also stets mit dem Drehwinkel bzw. der Bewegungsrichtung 32 der Betätigungs- bzw. Schaltwelle 20, und die "Zurückbewegung" der Hauptbetätigungselemente in ihre Neutralstellung erfolgt stets mit dem Drehwinkel bzw. Drehsinn 34. Dies kann allerdings auch umgekehrt sein. Für das Einlegen ist allerdings stets die gleiche Bewegungsrichtung bzw. der gleiche Drehwinkel vorgesehen, unabhängig davon, über welches Hauptbetätigungselement auf die Endausgangsmechanismen eingewirkt werden soll, um eine Übersetzungsstufe einzulegen. Die in den Fig. 3a und 3b gezeigte Gestaltung kann auch als "Active-Interlock"-Schienenbetätigung bezeichnet werden, und insbesondere für den Schwenkwinkel bzw. die Schwenkrichtung 32.

Es sind bei der Gestaltung gemäß Fig. 3a und Fig. 3b insbesondere Stellungen für die beiden Schaltrichtungen der Schaltschiene 14a gezeigt, wobei die Schaltrichtungsänderung durch Einwechseln des jeweiligen Hauptbetätigungselements 22 bzw. 24 erreicht wird. Damit ist jedem der einzelnen Hauptbetätigungselemente eine bestimmte Schaltrichtung bzw. eine bestimmte Schaltrichtung der betreffenden Schaltschiene 14 zugeordnet.

Im Unterschied zu der aus der DE 102 06 561 A1 bekannten Gestaltung bzw. der Gestaltung, die eingangs als interner Stand der Technik beschrieben ist, schaltet die Betätigung gemäß dem Ausführungsbeispiel nur mit dem halben Drehwinkel zum Schalten. Dadurch kann der Schaltantrieb, beispielsweise ein Elektromotor, auf den halben Schaltweg verkürzt werden. Dies kann unter bestimmten Bauraumverhältnissen von Vorteil sein. Bei der Gestaltung gemäß diesem Ausführungsbeispiel ist allerdings der Wählweg in etwa doppelt so groß im Vergleich zu der Gestaltung gemäß der DE 102 06 561 A1 bzw. der Gestaltung gemäß dem oben angesprochenen internen Stand der Technik.

Ein prinzipieller Vorteil der im Ausführungsbeispiel gezeigten Gestaltung besteht darin, dass für den Fall eines Referenz-"Black-Outs" in jedem Fall die Neutralgasse gefunden werden kann, da diese Position einem bestimmten Drehwinkel bzw. Drehsinn zugeordnet ist. Es kann in keinem Fall damit versehentlich ein Gang eingelegt werden. Anzumerken ist hierzu allerdings, dass die im Ausführungsbeispiel gezeigte Gestaltung in besonders bevorzugter Gestaltung mit einem elektronischen Steuergerät zum Ein- und Auslegen von Gängen angesteuert werden kann. Es ist allerdings auch möglich, eine solche Gestaltung bei einem Handschaltgetriebe bzw. einem Getriebe ohne elektronische Steuerung vorzusehen. Dennoch ist besonders bevorzugt vorgesehen, dass eine solche elektronische Steuerung vorgesehen ist, über welche auch Referenzierungsprozeduren der vorgeschlagenen Art bewirkt werden können. Dabei kann insbesondere auch eine Anschlageinrichtung vorgesehen sein.

Wie insbesondere die Fig. 2, 3a und 3b zeigen, ist bei diesem Ausführungsbeispiel vorgesehen, dass die Nebenbetätigungselemente 26, 26a, 28, 28a, in Achsrichtung der Betätigungswelle 20 gesehen, breiter sind, als die Hauptbetätigungselemente 22, 24. Diese Elemente sind dabei relativ so zueinander angeordnet, dass sichergestellt ist, dass ein entsprechendes Nebenbetätigungselement 26, 26a jeweils auf die gleiche Schaltschiene 14c zum Sperren und/oder Auslegen von Übersetzungsstufen, die über diese Schaltschiene einlegbar bzw. auslegbar sind, einwirken kann, wenn - in einer ersten Stellung der Betätigungswelle - das erste Hauptbetätigungselement 22 so positioniert ist, dass über dieses eine Übersetzungsstufe mittels der Schaltschiene 14a eingelegt werden kann (Fig. 3a) oder die Betätigungswelle 20 - in einer zweiten Stellung - so positioniert ist, dass über das zweite Hauptbetätigungselement 24 eine Übersetzungsstufe mittels dieser Schaltschiene 14a eingelegt werden kann (Fig. 3b). Es kann auch vorgesehen sein, dass anstelle eines jeden der Nebenbetätigungselemente 26, 26a jeweils zwei, axial beabstandete Nebenbetätigungselemente vorgesehen sind, die das Angesprochene bewirken. Dies kann insbesondere vorgesehen sein, wenn die Hauptbetätigungselemente 22, 24 einen größeren Abstand voneinander in Achsrichtung aufweisen, als dies in den Fig. 3a und 3b gezeigt ist.

In den in Fig. 3a und 3b gezeigten Stellungen kann kein Nebenbetätigungselement auf die Schaltschienen 14b und 14d einwirken. Dies hat den Hintergrund, dass die dort gezeigte "Active Interlock"-Ausbildung bzw. -einrichtung bzw. "Active-Interlock"-Schienenbetätigung eine beispielhafte Ausgestaltung für eine Getriebeeinrichtung mit zwei Teilantriebssträngen darstellt. Dabei sind die Schaltschienen 14a und 14c einem ersten Teilgetriebe und die Schaltschienen 14b und 14d einem zweiten Teilgetriebe zugeordnet. Sowohl die Hauptbetätigungselemente als auch die Nebenbetätigungselemente können in beiden Teilgetrieben bei der Gestaltung gemäß den Fig. 1 bis 3b wirken.

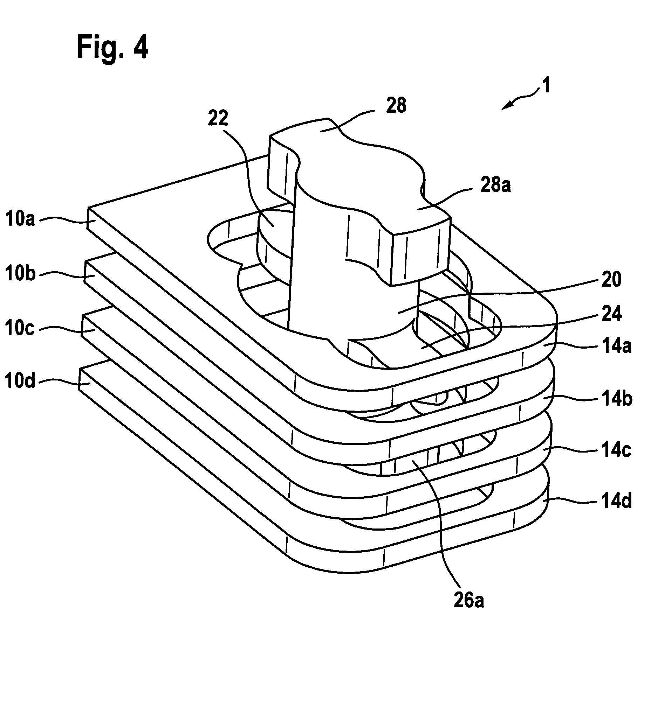

Fig. 4 zeigt eine dreidimensionale Ansicht der Gestaltung gemäß den Fig. 3a und 3b.

Bei der - insbesondere in den Fig. gezeigten - erfindungsgemäßen Gestaltung kann - insbesondere bei Weiterbildungen mit Steuerung bzw. elektronischem Steuergerät - eine sichere Neutralreferenz für den Getriebeaktor gefunden werden, die für den Fall eines Referenz-"Black-Outs" in jedem Fall von der Steuerung wieder gefunden wird, ohne Schaltungen im Getriebe vorzunehmen. Ein Referenz-"Black-Out" bedeutet insbesondere, dass ein bzw. die Referenzwerte verloren gehen.

Es sei angemerkt, dass die erfindungsgemäße Gestaltung insbesondere ein "Active-Interlock" ist bzw. aufweist.

Bei der Gestaltung gemäß den Fig. 1 bis 4 ist insbesondere - ausgehend von der bekannten Ausführung gemäß der DE 102 06 561 A1 bzw. von der intern der Anmelderin bekannten Gestaltung der Active Interlock - Schaltschiene mit Haupt- und Nebenbetätigungselement eine "Active Interlock"-Betätigung vorgeschlagen, die nur die Dreh- bzw. Betätigungswelle zum Schalten der Gänge nur in einer Drehrichtung betreibt.

Diese Gestaltung kann insbesondere auch "Active Interlock"-Schienenbetätigung mit eindeutiger Drehrichtung für die Drehwelle zur Erreichung der Neutralreferenz bzw. als

Schaltschienenbetätigung mit eindeutiger Schaltrichtung zum Erreichen der Neutralreferenz bezeichnet werden.

### Bezugszeichenliste

- 1: Getriebeeinrichtung
- 10: Endausgangsmechanismus
- 10a: Endausgangsmechanismus
- 10b: Endausgangsmechanismus
- 10c: Endausgangsmechanismus
- 10d: Endausgangsmechanismus
- 12: Betätigungseinrichtung
- 14: Schaltschiene
- 14a: Schaltschiene
- 14b: Schaltschiene
- 14c: Schaltschiene
- 14d: Schaltschiene
- 16: Fortsatz
- 18: Schaltmaul
- 20: Betätigungswelle
- 22: erstes Hauptbetätigungselement
- 24: zweites Hauptbetätigungselement
- 26: Nebenbetätigungselement
- 26a: Nebenbetätigungselement
- 28: Nebenbetätigungselement
- 28a: Nebenbetätigungselement
- 30: Doppelpfeil
- 30a: Pfeil (Bewegungsrichtung von 14)
- 30b: Pfeil (Bewegungsrichtung von 14)
- 32: Pfeil (Antriebsrichtung von 20 für Einlegen)
- 34: Pfeil (Antriebsrichtung von 20 für Rückbewegung)
- 36: Funktionskante von 18
- 38: Funktionskante von 18
- 40: Leergasse
- 100: zentrale Schaltwelle, Betätigungswelle, Drehwelle
- 102: Doppelpfeil (Wählrichtung)
- 104: Pfeil (Schaltrichtung)
- 106: Pfeil (Schaltrichtung)
- 108: Stift
- 110: Platte
- 112: Ausschnitt in 110
- 114: Ausschnitt in 110
- 116: Ausschnitt in 110

## Patentansprüche

1. Getriebeeinrichtung für ein Kraftfahrzeug, die eine Mehrzahl von Übersetzungsstufen bildenden Radsätzen aufweist, wobei Endausgangsmechanismen (10 bzw. 10a, 10b, 10c, 10d) vorgesehen sind, und wobei zum Betätigen der Endausgangsmechanismen (10) eine Betätigungseinrichtung (12) vorgesehen ist, die zum Einwirken auf Endausgangsmechanismen (10) für das Einlegen von Übersetzungsstufen mehrere antreibbare Hauptbetätigungselemente (22, 24), insbesondere Schaltfinger, aufweist, **dadurch gekennzeichnet, dass** auf zumindest einen Endausgangsmechanismus (10) wahlweise mittels eines ersten (22) oder eines zweiten Hauptbetätigungselements (24) eingewirkt werden kann, wobei dabei bei identischer Antriebsrichtung, insbesondere bei identischem Drehsinn, dieser beiden Hauptbetätigungselemente (22, 24) der Endausgangsmechanismus (10) in Abhängigkeit des auf diesen Endausgangsmechanismus (10) wirkenden Hauptbetätigungselements (22, 24) in einer von zwei verschiedenen, insbesondere entgegengesetzten, Richtungen bewegt wird.

2. Getriebeeinrichtung für ein Kraftfahrzeug, insbesondere nach Anspruch 1, die eine Mehrzahl von Übersetzungsstufen bildenden Radsätzen aufweist, wobei Endausgangsmechanismen (10) vorgesehen sind, und wobei zum Betätigen der Endausgangsmechanismen (10) eine Betätigungseinrichtung (12) vorgesehen ist, die zum Einwirken auf Endausgangsmechanismen (10) für das Einlegen von Übersetzungsstufen ein oder mehrere, vorzugsweise zwei, antreibbare Hauptbetätigungselemente (22, 24), insbesondere Schaltfinger, aufweist, wobei einem jedem dieser Hauptbetätigungselemente (22, 24) Hauptbetätigungselement-Neutralstellungen zugeordnet sind, in denen dieses Hauptbetätigungselement (22, 24) zum Wählen eines Endausgangsmechanismus (10), auf den zum Einlegen einer Übersetzungsstufe eingewirkt werden soll, bewegbar ist, **dadurch gekennzeichnet, dass** wenigstens eine Anschlageinrichtung für das bzw. die Hauptbetätigungselemente (22, 24) der Betätigungseinrichtung (12) vorgesehen ist, die so positioniert ist, dass ein an dieser Anschlageinrichtung anschlagendes Hauptbetätigungselement (22, 24) in einer Hauptbetätigungselement-Neutralstellung positioniert ist, wobei durch eine Bewegung des Hauptbetätigungselements entlang dieses Anschlags ein Endausgangsmechanismus (10), auf den mittels des Hauptbetätigungselements (22, 24) zum Einlegen einer Übersetzungsstufe eingewirkt werden soll, wählbar ist.

3. Getriebeeinrichtung gemäß einem der vorangehenden Ansprüche, **dadurch gekennzeichnet, dass** die Betätigungseinrichtung (12) eine Betätigungswelle (20) aufweist und das erste Hauptbetätigungselement (22) und das zweite Hauptbetätigungselement (24) auf bzw. in verschiedenen Ebenen wirken und in einem Winkel, insbesondere 180°-Winkel, zueinander angeordnet sind.

4. Getriebeeinrichtung nach einem der vorangehenden Ansprüche, **dadurch gekennzeichnet, dass** die Betätigungseinrichtung (12) für das Einwirken auf Endausgangsmechanismen (10) zum Auslegen von Übersetzungsstufen und / oder zum Sperren von Übersetzungsstufen wenigstens ein Nebenbetätigungselement (26, 26a, 28, 28a) aufweist.

5. Getriebeeinrichtung für ein Kraftfahrzeug, insbesondere nach einem der vorangehenden Ansprüche, die eine Mehrzahl von Übersetzungsstufen bildenden Radsätzen aufweist, wobei Endausgangsmechanismen (10) vorgesehen sind, die jeweils ein Verbindungselement, wie Schaltschiene (14) oder Schaltgabel, aufweisen, und wobei zum Betätigen der Endausgangsmechanismen (10) eine Betätigungseinrichtung (12) vorgesehen ist, die eine axialverschiebliche und dreh- bzw. schwenkbare Betätigungswelle (20) aufweist, und die für das Betätigen der Endausgangsmechanismen (10), insbesondere der Verbindungselemente (14), zum Einlegen von Übersetzungsstufen zwei Hauptbetätigungselemente (22, 24), insbesondere Schaltfinger, sowie für das Einwirken auf Endausgangsmechanismen (10) zum Auslegen von Übersetzungsstufen und / oder zum Sperren von Übersetzungsstufen wenigstens ein Nebenbetätigungselement (26, 26a, 28, 28a) aufweist, **dadurch gekennzeichnet, dass** diese zwei Hauptbetätigungselemente (22, 24) sich in Umfangrichtung versetzt, insbesondere um 180° versetzt, von dieser Betätigungswelle (20) erstrecken und in beabstandeten quer zur Achsrichtung der Betätigungswelle (20) gelegenen Ebenen wirken bzw. an der Betätigungswelle (20) angeordnet sind, wobei wahlweise eines dieser Hauptbetätigungselemente (22, 24) auf einen bzw. einen gewählten Endausgangsmechanismus (10) zum Einlegen einer Übersetzungsstufe einwirken kann, und wobei bei jeweils gleichem Drehsinn der Betätigungswelle (20) bei diesem Einwirken des einen, ersten Hauptbetätigungselements (22) eine Bewegung des Verbindungselementes (14) des Endausgangsmechanismus (10) in einer ersten Richtung bewirkt wird, und wobei bei diesem Einwirken des anderen, zweiten Hauptbetätigungselements (24) eine Bewegung dieses Verbindungselementes (14) dieses Endausgangsmechanismus (10) in einer zweiten, der ersten entgegengesetzten, Richtung bewirkt wird.

6. Getriebeeinrichtung gemäß einem der vorangehenden Ansprüche, **dadurch gekennzeichnet, dass** jeder der Endausgangsmechanismen (10) wenigstens ein Schaltmaul (18) aufweist, wobei die Haupt- (22, 24) und / oder Nebenbetätigungselemente (26, 26a, 28, 28a) über diese Schaltmäuler auf die Endausgangsmechanismen (10) betätigend einwirken können.

7. Getriebeeinrichtung gemäß Anspruch 6, **dadurch gekennzeichnet, dass** jedes der Schaltmäuler für jedes Haupt- (22, 24) und Nebenbetätigungselement (26, 26a, 28, 28a), das auf dieses jeweilige Schaltmaul (18), insbesondere betätigend, einwirken kann, eine Funktionskante aufweist.

8. Getriebeeinrichtung gemäß einem der vorangehenden Ansprüche, **dadurch gekennzeichnet, dass** das bzw. die Hauptbetätigungselemente (22, 24) derart bewegbar sind, dass das Hauptbetätigungselement (22, 24) bei seiner Bewegung nicht auf einen der Endausgangsmechanismen (10) so einwirkt, dass dieser ebenfalls bewegt wird, und dass das bzw. die Hauptbetätigungselemente (22, 24) derart bewegbar sind, dass das Hauptbetätigungselement (22, 24) bei seiner Bewegung auf einen der Endausgangsmechanismen (10) so einwirkt, dass dieser ebenfalls bewegt wird.

9. Getriebeeinrichtung gemäß einem der vorangehenden Ansprüche, **dadurch gekennzeichnet, dass** zwischen, insbesondere parallel zueinander ausgerichteten, Verbindungselementen (14) verschiedener Endausgangsmechanismen (10) Leergassen gebildet werden, wobei das eine Hauptbetätigungselement (22 bzw. 24) bei einer Betätigung eines Endausgangsmechanismus (10) mittels des anderen (24 bzw. 22) der beiden Hauptbetätigungselemente (22, 24) in der Ebene einer solchen Leergasse positioniert ist bzw. in eine solche Leergasse geschwenkt wird.

10. Getriebeeinrichtung gemäß einem der vorangehenden Ansprüche, **dadurch gekennzeichnet, dass** das Hauptbetätigungselement (22, 24), insbesondere jeweils aktive Hauptbetätigungselement (22, 24), und das oder die Nebenbetätigungselemente (26, 26a, 28, 28a) derart zusammenwirken, dass bei einer Bewegung dieses Hauptbetätigungselements (22, 24) in Schaltrichtung, durch welche dieses Hauptbetätigungselement (22, 24) bei fortgesetzter Bewegung so auf einen vorbestimmten Endausgangsmechanismus (10) einwirkt, dass mittels dieses Endausgangsmechanismus (10) eine Übersetzungsstufe eingelegt wird, das oder die Nebenbetätigungselemente (26, 26a, 28, 28a) auf wenigstens einen anderen Endausgangsmechanismus (10), insbesondere auf die verbleibenden Endausgangsmechanismen (10) der Getriebeeinrichtung (1) bzw. des gleichen Teilgetriebes der Getriebeeinrichtung (1) einwirkt, dass sichergestellt ist, dass sämtliche Übersetzungsstufen des Getriebes bzw. des Teilgetriebes ausgelegt sind, bevor mittels des vorbestimmten Endausgangsmechanismus (10) und des Hauptbetätigungselements (22 bzw. 24) bei fortgesetzter Bewegung die Ziel-Übersetzungsstufe eingelegt ist und / oder bevor eine Synchronisierung ausgelöst wird.

11. Getriebeeinrichtung nach einem der vorangehenden Ansprüche, **dadurch gekennzeichnet, dass** die Übersetzungsstufen bildenden Radsätze jeweils von verschiedenen Wellen getragene Rädern aufweisen, von denen eines drehbeweglich gegenüber seiner tragenden Welle angeordnet ist und zum Einlegen der betreffenden Übersetzungsstufe mittels eines Endausgangselements, wie Kupplungsmuffe, drehfest mit dieser verbindbar ist, wobei die Endausgangsmechanismen jeweils ein solches Endausgangselement aufweisen.

12. Getriebeeinrichtung nach einem der vorangehenden Ansprüche, **dadurch gekennzeichnet, dass** die Getriebeeinrichtung (1) zwei oder mehr Teilgetriebe aufweist, wobei für diese Teilgetriebe separate Haupt- (22, 24) und / oder Nebenbetätigungselemente (26, 26a, 28, 28a) vorgesehen sind.

13. Getriebeeinrichtung gemäß einem der vorangehenden Ansprüche, **dadurch gekennzeichnet, dass** ein elektronisches Steuergerät zum Ansteuern der Betätigungsvorrichtung vorgesehen ist.

14. Betätigungseinrichtung für die Betätigung von Endausgangsmechanismen (10) einer gemäß einem der vorangehenden Ansprüche ausgebildeten Getriebeeinrichtung (1), wobei die Betätigungseinrichtung (12) wenigstens zwei Hauptbetätigungselemente (22, 24) und wenigstens ein Nebenbetätigungselement (26, 26a, 28, 28a) aufweist, und wobei die Betätigungseinrichtung (12) insbesondere so ausgebildet ist, wie eine Betätigungseinrichtung (12) die Bestandteil einer Getriebeeinrichtung (1) gemäß einem der vorangehenden Ansprüche ist.

15. Verfahren zum elektronisch gesteuerten Ermitteln von Referenzpositionen einer Betätigungseinrichtung (12) einer Getriebeeinrichtung (1), und insbesondere einer Getriebeeinrichtung (1) gemäß einem der Ansprüche 1 bis 13, wobei eingangsseitig der Betätigungseinrichtung (12) wenigstens eine Antriebsseinrichtung, wie Elektromotor, vorgesehen ist, die elektronisch angesteuert wird, und wobei die Betätigungseinrichtung (12) zumindest ein Hauptbetätigungselement (22, 24) für das Einwirken auf Endausgangsmechanismen (10) der Getriebeeinrichtung (1) aufweist, wobei dieses wenigstens eine Hauptbetätigungselement (22, 24) in einer ersten Richtung bzw. Schaltrichtung, beweglich ist, und wobei dieses Hauptbetätigungselement (22, 24) in einem vorbestimmten Positionsbereich, der Neutral- bzw. Wählgasse, der ersten Richtung bzw. Schaltrichtung in einer quer zur ersten Richtung bzw. Schaltrichtung gelegenen Wählrichtung für das Wählen eines von ihm zu betätigenden Endausgangsmechanismus verlagerbar ist, wobei Bewegungs-änderungen des Hauptbetätigungselements (22, 24) mittels eines Inkrementalweggebers ermittelt werden, **dadurch gekennzeichnet, dass** die Antriebseinrichtung zur Ermittlung wenigstens einer in der Neutralgasse gelegenen Referenzposition, insbesondere einer Referenzposition des Inkrementalgebers in der ersten Richtung bzw. Schaltrichtung, in einer vorgegebenen, insbesondere abgespeicherten abgespeicherten, Antriebsrichtung angetrieben wird und auf das Hauptbetätigungselement (22, 24) treibend einwirkt, wobei die Referenzposition bzw. Neutralgasse erreicht ist, wenn das Hauptbetätigungselement (22, 24) bei dieser Antriebsrichtung der Antriebseinrichtung einen in Schaltrichtung gelegenen Anschlag erreicht hat.
